**Europäisches Patentamt**

**European Patent Office**

**Office européen des brevets**

(11) Veröffentlichungsnummer : **0 369 148 B1**

# (12) EUROPÄISCHE PATENTSCHRIFT

(45) Veröffentlichungstag der Patentschrift :
**05.08.92 Patentblatt 92/32**

(51) Int. Cl.$^5$ : **F01P 7/04**

(21) Anmeldenummer : **89118375.8**

(22) Anmeldetag : **04.10.89**

(54) Regeleinrichtung für den Antrieb des Lüfters einer Brennkraftmaschine.

(30) Priorität : **12.11.88 DE 3838404**

(43) Veröffentlichungstag der Anmeldung :
**23.05.90 Patentblatt 90/21**

(45) Bekanntmachung des Hinweises auf die
Patenterteilung :
**05.08.92 Patentblatt 92/32**

(84) Benannte Vertragsstaaten :
**DE FR GB IT**

(56) Entgegenhaltungen :
**EP-A- 0 097 230**
**FR-A- 1 402 416**
**US-A- 3 664 129**
**US-A- 4 709 666**

(73) Patentinhaber : **ROBERT BOSCH GMBH**
**Postfach 30 02 20**
**W-7000 Stuttgart 30 (DE)**

(72) Erfinder : **Altmann, Uwe, Dipl.-Ing.**
**Auenweg 8**
**W-7141 Schwieberdingen (DE)**

## Beschreibung

### Stand der Technik

Die Erfindung geht aus von einer Regeleinrichtung für den Antrieb des Lüfters einer Brennkraftmaschine nach der Gattung des Hauptanspruchs. Eine derartige aus der US-A 3 644 129 bekannte Regeleinrichtung hat den Nachteil, daß diese insbesondere bei hohen erforderlichen Lüfterleistungen - wie sie beispielsweise von Brennkraftmaschinen mit Ladeluftkühlung benötigt werden - oftmals nur unzureichend arbeiten und die Regelung sehr aufwendig wird. Ein Einbeziehen mehrerer Regelparameter ist kaum möglich.

Die EP-A 97 230 beschreibt eine Regeleinrichtung für den Antrieb des Lüfters einer Brennkraftmaschine über ein hydrostatisches Getriebe, wobei die Drehzahl des Motors mit Hilfe einer im Bypass zu ihm geschalteten Druckbegrenzungseinrichtung regelbar ist. Diese Einrichtung besteht aus mehreren Ventilen, die von einem elektronischen Steuergerät angesteuert werden. Diesem Steuergerät werden Temperaturwerte von einem Wärmefühler eingegeben. Dieser Fühler ist am Wasserkühler der Brennkraftmaschine angeordnet.

### Vorteile der Erfindung

Die erfindungsgemäße Regeleinrichtung mit den kennzeichnenden Merkmalen des Hauptanspruchs hat demgegenüber den Vorteil, daß sie verhältnismäßig einfach, kostengünstig und vielseitig verwendbar ist. Die thermische Belastung der Brennkraftmaschine ist gering, auch wenn hohe Lüfterleistungen erforderlich sind. Eine Einbeziehung mehrerer Regelparameter ist mit geringem Aufwand möglich.

### Zeichnung

Ein Ausführungsbeispiel der Erfindung ist in der nachfolgenden Beschreibung und Zeichnung näher erläutert. Letztere zeigt in schematischer Darstellung eine Brennkraftmaschine mit Regeleinrichtung für den Lüfter.

### Beschreibung des Ausführungsbeispiels

Die Brennkraftmaschine 10 treibt über ein Getriebe 11 eine Konstantpumpe 12 an, die Druckmittel über eine Saugleitung 13 aus einem Ölbehälter 14 ansaugt und dieses in eine Druckleitung 15 fördert. Die Druckleitung führt zu einem hydraulischen Konstantmotor 16, der den Lüfter 17 der Brennkraftmaschine antreibt. An den Auslaß des Konstantmotors ist eine Rückleitung 18 angeschlossen, die über eine Kühlschlange 19 zum Ölbehälter 14 führt.

Um den Konstantmotor 16 ist eine Bypassleitung 21 geführt, in der ein Proportional-Druckbegrenzungsventil 22 angeordnet ist, dessen Öffnungsdruck durch einen Elektromagneten 23 einstellbar ist. Der Wasserkühler der Brennkraftmaschine ist mit 20 bezeichnet. Außerdem hat die Brennkraftmaschine einen Ladeluftkühler 24. Dieser wie auch der Wasserkühler und die Kühlschlange werden durch vom Lüfter 17 angesaugte Kühlluft bestrichen. Am Ausgang des Ladeluftkühlers ist ein Temperaturfühler 26 angeordnet. Von diesem führt eine elektrische Leitung 27 zu einem elektronischen Steuergerät 28. Die Ladeluft wird in bekannter Weise durch einen Abgasturbolader 29 mit einem von diesem angetriebenen Lüfter 30 angesaugt und nach Kühlung im Ladeluftkühler 24 der Brennkraftmaschine wieder zugeführt.

Am Ausgang des Wasserkühlers 20 ist ein Temperaturfühler 31 angeordnet, von dem eine elektrische Leitung 32 ebenfalls zum elektronischen Steuergerät 28 führt. Vom elektronischen Steuergerät führt eine elektrische Leitung 33 zum Elektromagneten 23 des Druckbegrenzungsventils 22. Durch entsprechende Signale vom elektronischen Steuergerät kann das Druckbegrenzungsventil auf verschiedene Öffnungsdrücke eingestellt werden und steuert dementsprechend den Druck im Bypass 21 bzw. am Konstantmotor 16. Wenn die Brennkraftmaschine mit einer strichpunktiert angedeuteten Motorkapselung 35 ausgestattet ist, so kann im Bereich des in der Motorkapsel umlaufenden Luftstroms ein dritter Wärmefühler 36 angeordnet sein, von dem eine elektrische Leitung 37 ebenfalls zum elektronischen Steuergerät 28 führt.

Zweckmäßig ist es, wenn an die Brennkraftmaschine in bekannter Weise ein nicht dargestellter Retarder, z. B. eine Wirbelstrombremse, angeordnet ist. Von diesem Retarder führt eine elektrische Leitung 38 mit Schalter 39 ebenfalls zum elektronischen Steuergerät 28.

Die Wirkungsweise der Regeleinrichtung ist wie folgt: Zur Konstanthaltung der Ladelufttemperatur (z. B. ca. 45 bis 55 °C) wird über den Wärmefühler 26 und das elektronische Steuergerät 28 das Druckbegrenzungsventil 22 entsprechend angesteuert. Die Konstantpumpe 12 treibt den Konstantmotor 16 mit einer bestimmten Drehzahl an. Steigt die Ladelufttemperatur, so gibt das elektronische Steuergerät ein Signal an den Elektromagneten 23 des Druckbegrenzungsventils, worauf dieses, das zuvor auf einen bestimmten Durchflußdruck im Bypass eingestellt war, etwas weiter geschlossen wird, wodurch infolge Druckerhöhung im Bypass die Drehzahl des Konstantmotors und damit die des Lüfters erhöht wird. Dadurch erhöht sich auch die Kühlleistung. Der Druck am Konstantmotor wird also je nach Ladelufttemperatur stetig über den Wärmefühler 26, das elektronische Steuergerät sowie das Druckbegrenzungsventil entsprechend eingestellt.

Steigt die Leistung der Brennkraftmaschine weiter an, dann wird über den Temperaturfühler 31 die erhöhte Temperatur des Kühlwassers dem elektronischen Steuergerät signalisiert, und das Druckbegrenzungsventil verringert den Bypass-Durchfluß weiter, so daß der Druck und damit die Drehzahl des Lüfterrads und die Kühlleistung weiter erhöht werden. nun wird vorrangig die Kühlwassertemperatur geregelt.

Beim Bremsen des Kraftfahrzeugs über den hydrodynamischen Retarder tritt einer erhöhter Wärmeanfall auf. Bei Zuschalten des Retarders wird über den elektrischen Schalter 39 vom elektronischen Steuergerät 28 ein solches Signal an das Druckbegrenzungsventil 22 gegeben, daß dieses und damit der Bypass 21 nun ganz geschlossen werden. Das Lüfterrad 17 erreicht nun seine maximale Drehzahl und damit seine maximale Kühlleistung.

Weiterhin kann mit der Regeleinrichtung bei gekapselter Brennkraftmaschine und im Leerlaufbetrieb derselben bei erhöhten Außen- temperaturen im Motorraum, die Temperaturen ebenfalls geregelt werden. Dies geschieht mit Hilfe des Wärmefühlers 36 über das elektronische Steuergerät und die zuvor beschriebene Drehzahlregelung des Konstantmotors 16. Durch die beschriebene Regeleinrichtung erreicht man eine geringe thermische Belastung der Brennkraftmaschine und ihrer Zusatzaggregate. Außerdem werden Emissionswerte verringert.

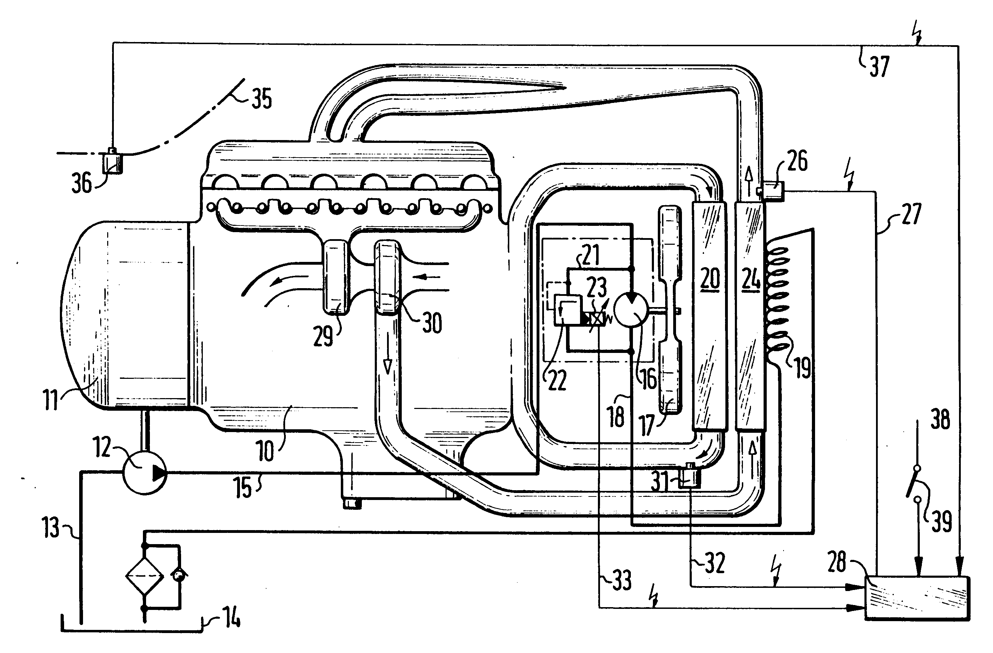

## Patentansprüche

1. Regeleinrichtung für den Antrieb des Lüfters (17) einer Brennkraftmaschine (10) über ein hydrostatisches Getriebe, das aus Konstantpumpe (12) und Konstantmotor (16) besteht, wobei die Drehzahl des Konstantmotors mit Hilfe eines im Bypaß zu ihm geschalteten, elektromagnetisch betätigbaren Druckbegrenzungsventils (22) regelbar ist, das von einem elektronischen Steuergerät (28) angesteuert wird, dadurch gekennzeichnet, daß die Brennkraftmaschine mit einer Ladeluftkühlung (20, 29, 30) versehen ist, und daß dem elektronischen Steuergerät Werte von mindestens zwei Wärmefühlern (26, 31, 36) eingegeben werden, von denen mindestens ein Wärmefühler (26) am Ladeluftkühler (24) und mindestens ein weiterer Wärmefühler (31) am Wasserkühler (20) der Brennkraftmaschine angeordnet ist.

2. Einrichtung nach Aspruch 1, dadurch gekennzeichnet, daß die Wärmefühler (26, 30) ausgangsseitig angeordnet sind.

3. Einrichtung nach einem der Ansprüche 1 und/oder 2, dadurch gekennzeichnet, daß ein hydrodynamischer Retarder vorgesehen ist, der bei Zuschaltung ebenfalls ein Signal dem elektronischen Steuergerät (28) eingibt, das nun das Druckbegrenzungsventil (22) in geschlossenen Zustand bringt.

4. Einrichtung nach einem der Ansprüche 1 bis 3, dadurch gekennzeichnet, daß ein weiterer Wärmefühler (36) im Umlaufkanal einer die Brennkraftmaschine umhüllenden Motorkapsel angeordnet ist, der ebenfalls mit dem elektronischen Steurgerät (28) in Wirkverbindung steht und über dieses auf das Druckbegrenzungsventil (22) einwirkt.

5. Einrichtung nach einem der Ansprüche 1 bis 4, dadurch gekennzeichnet, daß das Druckbegrenzungsventil druckproportional steuerbar ist.

## Revendications

1. Dispositif de réglage pour la commande du ventilateur (17) d'un moteur à combustion interne (10) par l'intermédiaire d'une commande hydrostatique, composée d'une pompe à cylindrée constante (12) et d'un moteur à cylindrée constante (16), dans lequel la vitesse de rotation du moteur à cylindrée constante est réglable à l'aide d'une soupape de limitation de pression (22), branchée dans une dérivation par rapport à elle et actionnable électromagnétiquement, soupape qui est commandée par un appareil de commande (28) électronique, caractérisé en ce que le moteur à combustion interne est muni d'un refroidissement d'air en charge (20, 29, 30) et en ce qu'au moins deux sondes thermiques (26, 31, 36) transmettent des valeurs à l'appareil de commande, sondes parmi lesquelles au moins une sonde (26) est placée sur le refroidisseur d'air en charge (24) et au moins une autre sonde (31) sur le réfrigérant à eau (20) du moteur à combustion interne.

2. Dispositif selon la revendication 1, caractérisé en ce que les sondes thermiques (26, 30) sont placées du côté sortie.

3. Dispositif selon une des revendications 1 et/ou 2, caractérisé en ce qu'un appareil retardateur hydrodynamique est prévu pour donner également un signal après commutation à l'appareil de commande électronique qui amène alors la soupape de limitation de pression (22) dans un certain état de fermeture.

4. Dispositif selon une des revendications 1 à 3, caractérisé en ce qu'une autre sonde thermique (36) est placée dans le canal de circulation d'un encapsulage entourant le moteur à combustion interne, sonde qui se trouve également en liaison avec l'appareil de commande électronique (28) et agit par l'intermédiaire de celui-ci sur la soupape de limitation de pression (22).

5. Dispositif selon une des revendications 1 à 4, caractérisé en ce que la soupape de limitation de pression peut être commandée par action proportionnelle à la pression.

**Claims**

1. Control device for the drive of the fan (17) of an internal combustion engine (10) via a hydrostatic transmission which consists of a fixed displacement pump (12) and a fixed displacement motor (16), the rotational speed of the fixed displacement motor being controllable by means of a relief valve (22) connected in the bypass to the fixed displacement motor and electromagnetically actuable, the relief valve (22) being activated by an electronic control unit (28), characterised in that the internal combustion engine is provided with boost air cooling (20, 29, 30) and that values from at least two heat sensors (26, 31, 36) are input to the electronic control unit, of which heat sensors at least one heat sensor (26) is located on the boost air cooler (24) and at least one further heat sensor (31) is located on the radiator (20) of the internal combustion engine.

2. Device according to Claim 1, characterised in that the heat sensors (26, 30) are located on the outlet end.

3. Device according to one of Claims 1 and/or 2, characterised in that a hydrodynamic retarder is provided which, when switched on, likewise inputs a signal to the electronic control unit (28), which now brings the relief valve (22) into the closed condition.

4. Device according to one of Claims 1 to 3, characterised in that a further heat sensor (36) is located in the circulating duct of an engine capsule surrounding the internal combustion engine, this further heat sensor (36) being similarly in effective connection with the electronic control unit (28) and acting via the latter on the relief valve (22).

5. Device according to one of Claims 1 to 4, characterised in that the relief valve can be controlled to proportional pressure.